# FASCICULE DE BREVET EUROPEEN

(11) **EP 4 034 932 B1**
(45) Date de publication et mention de la délivrance du brevet: **03.04.2024**
(21) Numéro de dépôt: 20792468.9
(22) Date de dépôt: 25.09.2020
(51) Int. Cl.: G02B 23/06, G02B 7/182

(54) **TELESCOPE EQUIPE D'UN DISPOSITIF DE REGLAGE DE L'INCLINAISON ET DE LA POSITION D'UN MIROIR**
TELESKOP MIT EINER VORRICHTUNG ZUM EINSTELLEN DER NEIGUNG UND DER POSITION EINES SPIEGELS
TELESCOPE PROVIDED WITH A DEVICE FOR ADJUSTING THE TILT AND THE POSITION OF A MIRROR

(30) Priorité: 26.09.2019 FR 1910648
(43) Date de publication de la demande: 03.08.2022
(73) Titulaire: Unistellar, 13001 Marseille (FR)
(72) Inventeur: MALVACHE, Arnaud, 13710 FUVEAU (FR); BOROT, Antonin, 13007 MARSEILLE (FR)
(74) Mandataire: Roman, Alexis
(86) Numéro de dépôt international: PCT/FR2020/051675
(87) Numéro de publication internationale: WO 2021/058921

(56) Documents cités:
- FR-A1- 2 923 302
- JP-A- S61 160 711
- US-A- 6 118 579

## Description

### Domaine technique.

L'invention a pour objet un télescope équipé d'un dispositif de réglage de l'inclinaison et de la position d'un miroir.

L'invention se rapporte au domaine technique des dispositifs de réglage des systèmes optiques des télescopes.

### Etat de la technique.

Un télescope est destiné à observer des objets du ciel. Il permet entre autres d'observer des planètes, des astres, des comètes, des nébuleuses, des galaxies, et de manière générale des objets célestes proches ou lointains. Le télescope est notamment utilisé par les astronomes bien que son utilisation se soit démocratisée depuis quelques années et que l'observation des étoiles soit devenue une passion pour de nombreuses personnes de différentes générations. Afin de répondre à la demande des consommateurs de plus en plus nombreux, les fabricants ont dû diversifier ces instruments pour répondre à la demande d'un public plus large.

Les télescopes connus actuellement sur le marché intègrent un système optique formé par un agencement de miroirs et/ou lentilles disposés à l'intérieur d'un corps creux de manière à collecter les rayons lumineux émis par l'objet observé et former une image dudit objet dans un plan focal.

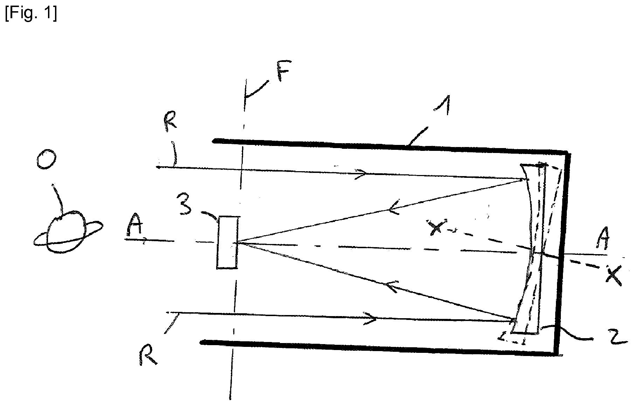

La figure 1 schématise un télescope de l'art antérieur. Il comporte un corps creux 1 à l'intérieur duquel pénètrent, en usage, des rayons lumineux R provenant d'un objet observé O, par exemple une planète ou une étoile. Son système optique est ici composé d'un seul miroir primaire 2 concave, positionné dans le corps creux 1. Ce miroir réfléchit les rayons lumineux R pour former, dans un plan focal F, une image de l'objet O. Un capteur d'image 3 permet d'acquérir l'image de l'objet O.

Pour obtenir une image de qualité, le capteur 3 doit être positionné dans le plan focal F et l'axe X-X du miroir 2 doit être colinéaire à l'axe optique A-A. La position du miroir 2 sur l'axe optique A-A (c'est-à-dire la distance séparant le miroir du capteur 3) et son inclinaison peuvent être déréglées lors de la manutention du télescope et/ou être mal réglées à cause des contraintes et tolérances de fabrication. Un miroir déréglé est illustré par les pointillés sur la figure 1. Il apparaît donc nécessaire de régler la position du miroir 2, ou en d'autres termes, d'effectuer une mise au point c'est-à-dire régler la distance séparant le miroir du capteur 3. Il apparaît également nécessaire de régler l'inclinaison du miroir 2, ou réglage angulaire, pour repositionner l'axe dudit miroir dans l'axe optique A-A.

Aussi, il est courant que les télescopes intègrent un dispositif de réglage de l'inclinaison (réglage angulaire) et de la position (mise au point) au moins du miroir primaire. Les dispositifs de réglage actuels sont toutefois complexes à réaliser, onéreux, et difficile à régler pour un utilisateur amateur. Ils nécessitent en outre de démonter généralement certaines pièces du télescope pour accéder au dispositif de réglage, ce qui complexifie d'autant plus leur utilisation. Les documents FR2923302, US6118579 et JPS61160711 divulguent des télescope et leurs systèmes de réglage connus.

L'invention vise à remédier à cet état des choses. En particulier, un objectif de l'invention est de proposer un dispositif de réglage de l'inclinaison et de la position d'un miroir qui soit simple à réaliser et peu onéreux tout en étant précis et facile à régler pour un utilisateur amateur.

### Présentation de l'invention.

La solution proposée par l'invention est un télescope comportant :
- un corps creux à l'intérieur duquel pénètrent, en usage, des rayons lumineux provenant d'un objet observé,
- un système optique positionné dans le corps creux pour former, dans un plan focal, une image de l'objet observé, lequel système optique comprend au moins un miroir adapté pour réfléchir les rayons lumineux pénétrant dans ledit corps,
- un dispositif de réglage de l'inclinaison et de la position du miroir

Ce télescope est remarquable en ce que le dispositif de réglage comporte:
- un chariot monté mobile en translation dans le corps creux, selon l'axe optique,
- un plateau support dans lequel est fixé le miroir, lequel plateau est solidarisé au chariot au moyen d'une articulation permettant une modification de l'inclinaison dudit plateau,
- le chariot est entraîné en translation au moyen d'un mécanisme vis/écrou,
   ∘ le mécanisme vis/écrou est actionnable au moyen d'un bouton de réglage préhensible depuis l'extérieur du corps creux, lequel bouton est en prise avec la vis ou l'écrou dudit mécanisme,
   ∘ le bouton de réglage est monté mobile en rotation dans une pièce de carter du corps creux,
   ∘ le bouton de réglage est agencé avec le mécanisme vis/écrou de sorte qu'une rotation dudit bouton entraîne le déplacement en translation du chariot,
   ∘ le bouton de réglage est associé à un organe de butée adapté pour coopérer avec un organe de butée complémentaire aménagé dans la pièce de carter, de manière à limiter la rotation du bouton de réglage et le déplacement du chariot,
- au moins un actionneur monté mobile dans le chariot et qui agit sur le plateau support, de sorte qu'un déplacement dudit actionneur entraîne une modification de l'inclinaison ledit plateau, lequel actionneur est actionnable depuis l'extérieur du corps creux depuis la pièce de carter.

L'utilisateur peut très facilement faire une mise au point très précise en faisant simplement tourner le bouton. En opérant de cette manière, le chariot mobile translate le long de l'axe optique entraînant le plateau support et le miroir. Le réglage de l'inclinaison se fait également très simplement et de façon précise en actionnant l'actionneur. Tous ces réglages se font depuis l'extérieur du corps creux sans avoir à démonter une quelconque pièce du télescope, et sont localisés sur la pièce de carter, ce qui simplifie grandement leur mise en oeuvre. L'ensemble des moyens de réglages La conception de ce dispositif de réglage est en outre particulièrement simple, permettant d'en limiter les coûts.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation avantageux, les organes de butée sont agencés pour limiter la rotation du bouton de réglage à un seul tour.
- Selon un mode de réalisation avantageux : la vis et l'écrou du mécanisme vis/écrou sont coaxiaux à l'axe optique du télescope; et le bouton de réglage est monté mobile en rotation autour d'un axe qui est coaxial à l'axe optique du télescope.
- Selon un mode de réalisation avantageux, l'articulation du plateau support sur le chariot est une rotule centrée sur l'axe du miroir.
- Selon un mode de réalisation avantageux, le centre du miroir est positionné sur l'axe optique.
- Selon un mode de réalisation avantageux : deux actionneurs sont montés mobiles dans le chariot, chaque actionneur se présentant sous la forme d'une vis de réglage dont l'extrémité distale (agit contre le plateau support pour modifier l'inclinaison dudit plateau.
- Selon un mode de réalisation avantageux, l'extrémité distale de la vis de réglage est de forme sphérique et se loge dans un siège solidaire du plateau support, ledit siège et ladite extrémité distale étant configurés de manière à former une liaison linéaire/annulaire.
- Selon un mode de réalisation avantageux, chaque vis de réglage agit dans une zone de contact distincte, lesquelles zones forment avec le centre de la rotule un angle de 90°.
- Selon un mode de réalisation avantageux, un ou plusieurs organes élastiques agissent sur le plateau support, chaque organe élastique agit dans une zone de contact, qui est distincte des zones de contact des vis de réglage.
- Selon un mode de réalisation avantageux, le bouton de réglage et/ou la pièce de carter sont munis de graduations.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] précitée est un schéma illustrant un télescope intégrant un système optique.
[Fig. 2] est une vue éclatée montrant un miroir et différents éléments constitutifs du plateau support et du chariot mobile conformes à l'invention.
[Fig. 3] est une vue de la face arrière d'un plateau support conforme à l'invention.
[Fig. 4] est une vue en coupe transversale de l'assemblage du miroir, du plateau support et du chariot mobile de la figure 2.
[Fig. 5] est une vue éclatée montrant différents éléments constitutifs d'un bouton et d'une pièce de carter conforme à l'invention.
[Fig. 6] est une vue de face du bouton monté dans la pièce de carter de la figure 5.
[Fig. 7] est une vue en coupe transversale de l'assemblage du bouton et de la pièce de carter de la figure 5.
[Fig. 8] est une vue éclatée montrant d'une part l'assemblage du miroir, du plateau support et du chariot mobile de la figure 2 et d'autre part de l'assemblage du bouton et de la pièce de carter de la figure 5.
[Fig. 9] est une vue en coupe transversale d'un dispositif de réglage selon l'invention monté dans le corps creux d'un télescope.
[Fig. 10] schématise un siège dans lequel se loge l'extrémité distale d'un vis de réglage de l'inclinaison du miroir.

### Description des modes de réalisation.

Tel qu'utilisé ici, sauf indication contraire, l'utilisation des adjectifs ordinaux « *premier* », « *deuxième* », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

Le télescope objet de l'invention est utilisé pour l'observation d'objets célestes (planètes, étoiles, constellations, nébuleuses, galaxies, « deep sky object »...) mais peut également être utilisé pour l'observation d'objets non célestes tels que des paysages, des personnages, des animaux, etc.

Le télescope peut être du type décrit sur la figure 1, comprenant notamment un corps creux 1, un système optique composé d'un miroir primaire 2, et d'un capteur d'image 3. Le système optique peut toutefois être différent et comporter par exemple un miroir primaire, un miroir secondaire et éventuellement une ou plusieurs lentilles. Le capteur d'image 3 peut être remplacé par un oculaire classique.

Le corps creux 1 a préférentiellement la forme d'un tube creux de section circulaire, mais pourrait être un tube de section ovale, carrée, octogonale, ou autre. Il est précisé que le corps creux 1 n'est pas nécessairement de forme tubulaire, mais peut être de forme conique, ou formé de portions de tubes ou de cônes par exemple. Le corps creux 1 peut être réalisé en métal, en matériau plastique, en matériau composite, etc. A titre d'exemple, sa longueur est comprise entre 200 mm et 1000 mm, son diamètre compris entre 50 mm et 500 mm et son épaisseur comprise entre 1 mm et 10 mm.

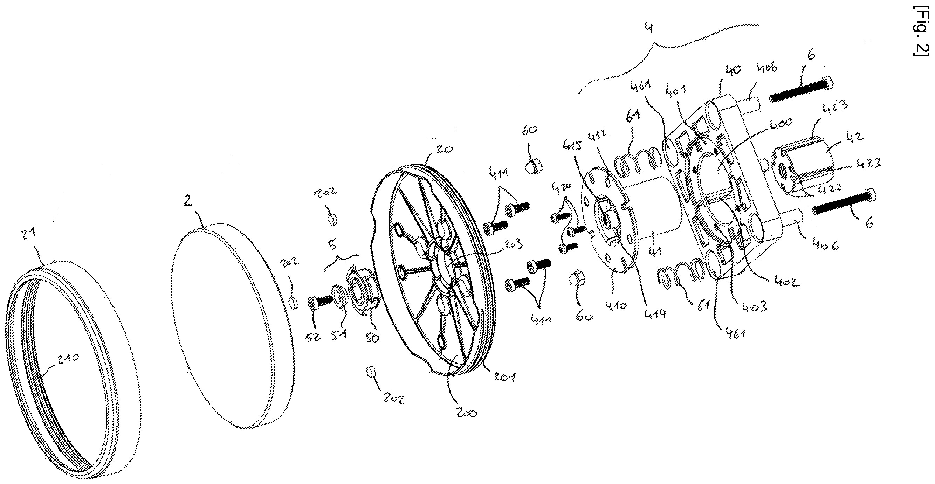

Le miroir 2 est préférentiellement un miroir parabolique concave dont le diamètre correspond sensiblement à celui du corps creux 1. Sur la figure 2, le miroir 2 a une forme circulaire adaptée à la forme et au diamètre interne du corps creux 1. Le centre du miroir 2 est positionné sur l'axe optique A-A (abstraction faite des contraintes de fabrications).

Le capteur 3 est disposé sur l'axe optique A-A, dans le plan focal F pour acquérir l'image de l'objet observé O. Le capteur 3 est un composant photosensible servant à convertir les rayons lumineux R en signaux électriques. L'image de l'objet observé étant acquise par le capteur 3, on réalise donc une observation indirecte de l'objet, l'utilisateur n'observant pas directement l'image au travers d'un oculaire. Le capteur 3 peut être préférentiellement un capteur CCD (pour l'acronyme anglais Charged Coupled Device) ou CMOS (pour l'acronyme anglais Complementary Métal Oxide Semiconductor) comportant un agencement de pixels (préférentiellement en générant des images couleur). Ce type de capteur 3 a des dimensions réduites, ce qui permet de l'installer aisément dans le corps creux 1, sans interférer avec les rayons R, tout en conservant une luminosité optimale. Le diamètre du capteur 3 est par exemple compris entre 15 mm et 30 mm.

Les signaux électriques générés par le capteur 3 peuvent être transmis à une unité électronique de traitement d'image (non représentée) par une connexion filaire ou sans fil (Bluetooth^{®}, Wifi^{®}, ZigBee^{®}, etc). Les images de l'objet O sont alors être visionnées sur un écran, qui peut être distant du télescope, par exemple sur l'écran d'un Smartphone (téléphone intelligent).

Le dispositif de réglage de la mise au point et de l'inclinaison du miroir 2 va maintenant être décrit en détail en référence aux figures 2 à 9.

Le miroir 2 se loge dans le plateau support 20. Ce dernier à une forme de coupelle circulaire ajustée aux dimensions du miroir 2. La face avant du plateau 20 présente un logement 200 dans lequel est installé le miroir 2. Le plateau 20 est réalisé en plastique injecté ou en métal, par exemple en aluminium. Le miroir 2 est maintenu en position dans le plateau 20 au moyen d'un opercule 21 présentant une ouverture centrale laissant libre la surface active (ou surface réfléchissante) du miroir 2. Ce dernier présente une paroi latérale 210 filetée qui se visse sur une paroi latérale 201 également filetée du plateau 20. La fixation de l'opercule 21 sur le plateau 20 peut toutefois être réalisée d'une autre manière, par exemple par clipssage, collage, soudage etc.

Ainsi positionné, le miroir 2 est alors pris en sandwich entre la face avant du plateau 20 et la face arrière de l'opercule 21. L'axe du plateau 20 coïncide avec l'axe X-X du miroir 2. Pour assurer un serrage souple du miroir 2 dans le plateau 20 lorsque l'opercule est monté, on utilise avantageusement des tampons ou pastilles souples 202, par exemple réalisés en caoutchouc ou silicone. Ces tampons ou pastilles 202 sont installés de manière homogène sur la face arrière du miroir 2 et/ou dans le logement 200 du plateau 20.

Le plateau 20 est solidarisé à un chariot 4 monté mobile en translation dans le corps 1, selon l'axe optique A-A du télescope. Sur la figure 2, le chariot 4 comporte une platine 40 sur laquelle est fixé un axe 41.

La platine 40 peut être réalisée en plastique injecté ou en aluminium par exemple. Elle présente un logement tubulaire 400 traversant de part en part la platine 40. Ce logement 400 est préférentiellement de forme cylindrique et dimensionné pour recevoir l'axe 41. Il est centré sur le milieu de la platine 40. Sa paroi interne présente une ou plusieurs rainures de guidage longitudinales 402 dont la fonction est décrite plus avant dans la description.

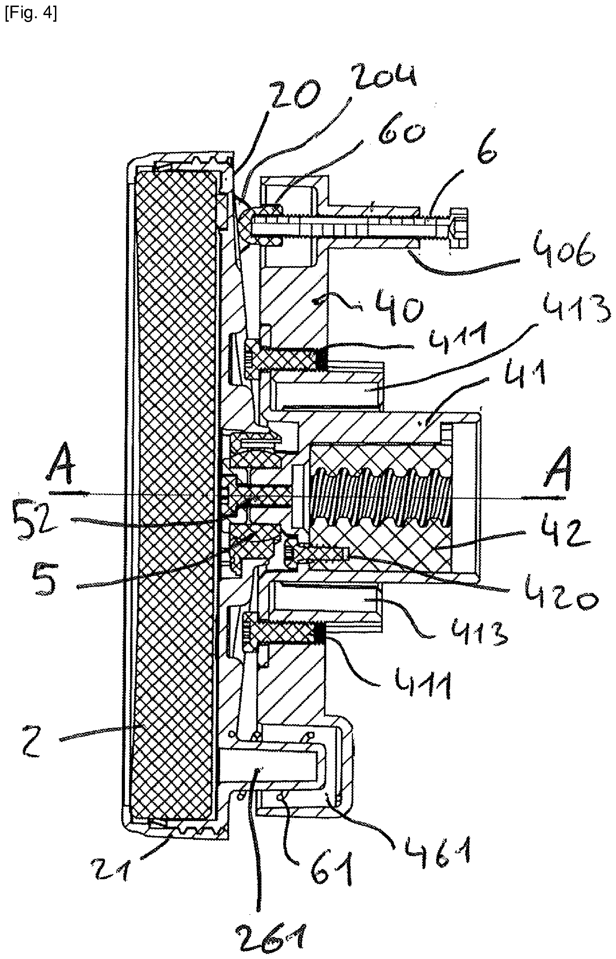

L'axe 41 se présente avantageusement sous la forme d'un tube cylindrique creux pourvu d'une bride 410 au niveau de son extrémité distale. Celle-ci est obturée par une paroi de fond. Le diamètre externe de l'axe 41 est inférieur au diamètre interne du logement 400 de façon à laisser un espace annulaire 413 (visible sur la figure 4) autour dudit axe. L'extrémité proximale de l'axe 41 est ouverte de manière à pouvoir y insérer un écrou 42.

Un aménagement 401 est réalisé sur la face avant de la platine 40, autour du logement tubulaire 400. Cet aménagement 401 est conformé pour recevoir la bride 410 de l'axe 41. La fixation de la bride 410 dans l'aménagement 401 (et donc de l'axe 41 sur la platine 40) est réalisée au moyen de vis 411. Ces vis 411 passent au travers de trous traversant 412 réalisés dans la bride 410 et se vissent dans des trous taraudés 403 réalisés dans l'aménagement 401.

La longueur de l'axe 41 est supérieure à celle du logement 400. Dans cette configuration, et comme illustré sur la figure 4, l'extrémité proximale de l'axe 41 dépasse de la face arrière de la platine 40.

L'écrou 42 se loge à l'intérieur de l'axe 41. Il est maintenu en position dans l'axe 41 au moyen de vis 420. Ces dernières passent au travers de trous traversant 414 réalisés dans une paroi de fond de l'axe 41 et se vissent dans des trous taraudés 422 réalisés sur l'écrou 42. La paroi externe de l'écrou 42 est avantageusement pourvue de rainures longitudinales 423 coopérant avec des nervures complémentaires (non représentées) réalisé sur la paroi interne de l'axe 41. Ces rainures et nervures forme un détrompeur permettant de positionner très simplement les trous taraudés 422 en face des trous 414.

L'écrou 42 est préférentiellement réalisé en téflon ou POM (pour Poly-Oxy-Méthylène) de manière à limiter les frottements avec la vis de réglage décrite plus avant dans la description.

Le plateau 20 est solidarisé au chariot 4 au moyen d'une articulation permettant une modification de l'inclinaison dudit plateau. Cette articulation est préférentiellement une rotule centrée sur l'axe du plateau 20 et, partant, sur le centre du miroir 2 et sur l'axe optique A-A. de Le plateau 20 a ainsi trois degrés de liberté en rotation. Ce mouvement de rotulage du plateau 20 permet de l'incliner dans tous les sens. L'utilisation d'une rotule 5 centrée sur l'axe du miroir 2 (et sur l'axe optique) offre comme principal avantage de pouvoir régler l'angle du plateau 2 (et donc l'angle du miroir), sans modifier sa longueur focale, ou à tout le moins, en minimisant le déréglage de cette longueur focale.

Sur la figure 2, cette rotule 5 est formée par une bague 50 dans laquelle est logé une bille ou noix 51. La bague 50 forme la portée sphérique de la rotule et peut intégrer des roulements pour limiter les frottements avec la bille ou noix 51 Elle est fixée dans un logement 205 aménagé au centre du plateau 20. Cette fixation est réalisée par clipssage, vissage, collage, soudage, etc. La bille ou noix 51 constitue la portée sphérique mâle de la rotule. Une vis 52 permet de maintenir en position la bille ou noix 51 dans la bague 50. Cette vis 52 traverse la bille ou noix 51, la bague 50 et le plateau 20 pour venir se visser dans un trou taraudé 415 réalisé dans la paroi de fond de l'axe 41, au centre de la bride 410.

Au moins un actionneur est monté mobile dans le chariot 4. Cet actionneur agit sur le plateau 20, de sorte qu'un déplacement dudit actionneur entraîne une modification de l'inclinaison ledit plateau. Sur la figure 2, deux actionneurs sont représentés. Ils se présentent chacun sous la forme d'une vis de réglage 6 dont l'extrémité distale agit contre le plateau 20 pour modifier son inclinaison.

Chaque vis de réglage 6 est montée en prise dans un fût taraudé 406 réalisé dans la platine 40. Le fût 406 est suffisamment long pour que la vis 6 ne rotule pas dedans. Par exemple la longueur du fût est supérieur ou égale à la moitie de la longueur de la vis 6. La vis 6 est insérée depuis la face arrière de la platine 40 et ressort au niveau de sa face avant.

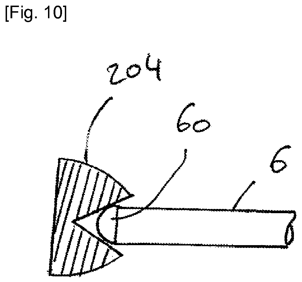

En se rapportant aux figures 4 et 10, l'extrémité distale 60 de la vis de réglage 6 est de forme sphérique, et plus précisément de forme hémisphérique. Cette extrémité distale 60 se loge dans un siège 204 solidaire du plateau 20. Le siège 204 et l'extrémité distale 60 sont configurés de manière à former une liaison linéaire/annulaire (ou sphère/cylindre). Le siège peut avoir une forme conique ou de rigole, de section en V par exemple. Cette forme permet un mouvement relatif de rotulage entre le siège 204 et l'extrémité distale 60, ainsi qu'un certain glissement de ladite extrémité distale dans ledit siège. Ce type de liaison présente l'avantage de limiter les contraintes sur la vis 6 et/ou sur le plateau 20, lorsque ladite vis agit sur ledit plateau. Pour simplifier la conception et réduire les coûts de fabrication, l'extrémité distale est avantageusement formée par un écrou à tête ronde 60 (figure 2) vissé à l'extrémité de la vis 6.

En faisant tourner la vis de réglage 6 dans un sens ou dans l'autre dans le fût 406, l'extrémité distale 60 de la vis 6 fait plus ou moins saillie de la face avant de la platine 40 et va venir pousser le plateau 20. Cette force de poussée va faire pivoter le plateau 20 autour de la rotule 5 de sorte que son angle d'inclinaison va changer. La mise en rotation de la vis de réglage 6 est opérée manuellement, au moyen d'un outil adapté (par exemple un tournevis ou une clé allen) qui s'engage dans une empreinte réalisée dans la tête de ladite vis.

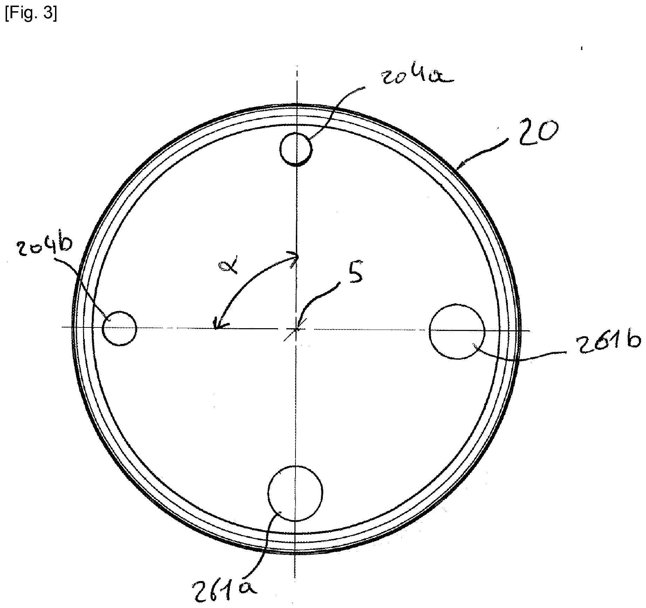

En se rapportant à la figure 3, chaque vis de réglage 6 agit dans une zone de contact distincte 204a, 204b, ces zones étant matérialisées par les sièges 204. Ces zones de contact 204a, 204b forment avec le centre de la rotule 5 un angle α de 90°. Sur la figure 3, une zone de contact 204a est située à la verticale du centre de la rotule 5 et une autre zone de contact 204b est située à l'horizontale dudit centre. En agissant seulement sur la zone de contact 204a, le plateau 20 pivote haut-bas (autour de l'axe de tangage pour une analogie avec l'aéronautique). En agissant seulement sur la zone de contact 204b, le plateau 20 pivote droite-gauche (autour de l'axe de lacet pour une analogie avec l'aéronautique). Et en agissant simultanément sur les deux zones 204a, 204b, on peut régler l'inclinaison du plateau 20 dans toutes les directions. Une position des zones de contact 204a, 204b à 90° permet d'avoir un réglage précis de l'angle d'inclinaison du plateau 20, avec un débattement limité des vis de réglage 6.

Le plateau 20, supportant le miroir 2, est susceptible de basculer sous son propre poids, ce qui provoquerait un déréglage intempestif de son inclinaison. Pour remédier à cela, il est possible de prévoir une liaison rotule entre l'extrémité distale 60 de la vis de réglage 6 et le siège 204. Cette solution peut être envisagée mais engendre toutefois des contraintes mécaniques, même minimes, sur la vis de réglage 6 et/ou sur le plateau 20, lorsque ladite vis agit sur ledit plateau. En outre, une liaison rotule n'étant pas parfaite à causes de tolérances de fabrication, un certain jeu peut exister entre l'extrémité distale 60 de et le siège 204, lequel jeu limite la précisons de réglage de l'angle d'inclinaison du miroir 2.

Pour résoudre ce problème, des organes élastiques 61 agissent sur le plateau 20. Sur les figures 2 et 4, ces organes élastiques 61 se présentent sous la forme de ressorts hélicoïdaux standards permettant de réduire les coûts de fabrication. Ces organes élastiques 61 agissent sur le plateau 20 de manière à générer une force de poussée qui s'oppose à celle exercée par les vis de réglage 6. Le plateau 20 et le miroir 2 sont ainsi parfaitement maintenu en position, quel que soit l'angle d'inclinaison, les éventuellement jeux fonctionnels sont rattrapés. On assure ainsi un réglage précis de l'angle d'inclinaison du miroir 2.

En se rapportant à la figure 3, chaque organe élastique 61 agit dans une zone de contact 261a, 261b. Pour optimiser les effets précités au paragraphe précédent, ces zones de contact 261a, 261b sont distinctes des zones de contact 204a, 204b des vis de réglage 6. Sur la figure 3, les zones de contact 261a, 261b sont disposées de manière symétrique aux zones 204a, 204b, par rapport au centre de la rotule 5. Ces zones de contact 261a, 261b forment alors avec le centre de la rotule 5 un angle α de 90°. Une zone de contact 261a est située à la verticale du centre de la rotule 5 et une autre zone de contact 261b est située à l'horizontale dudit centre. Le ressort 61 qui agit sur la zone de contact 261a, génère une force de poussée qui s'oppose à celle exercée par la vis de réglage 6 agissant sur la zone de contact 204a. Et le ressort 61 qui agit sur la zone de contact 261b, génère une force de poussée qui s'oppose à celle exercée par la vis de réglage 6 agissant sur la zone de contact 204b. Chaque vis de réglage 6 est ainsi associée à un ressort 61, ce qui améliore non seulement le maintien en position du plateau 20 et du miroir 2, mais également le rattrapage des éventuellement jeux fonctionnels.

En se rapportant aux figures 2 et 4, les ressorts 61 sont montés libres dans des logements 461 aménagés dans la platine 40 et dont l'ouverture se situe au niveau de la face avant de ladite platine. Une extrémité du ressort 61 agit contre une paroi de fond du logement 641. Ce logement assure un maintien en position de cette extrémité du ressort 61. L'autre extrémité du ressort 61 agit librement contre la face arrière du plateau 20, au niveau de la zone de contact 261a ou 261b. Pour éviter un flambage du ressort 61 et s'assurer qu'il agit correctement dans la zone de contact, on prévoit avantageusement un guide 261 sur lequel est monté le ressort 61. Ce guide 261 se présente sous la forme d'une potion tubulaire faisant saillie de la face arrière du plateau 20. Les dimensions et formes des guides 261 et des logements 461 sont telles que lesdites guides peuvent s'emboîter dans lesdits logements. On obtient alors un assemblage très compact du plateau et du chariot 4, comme illustré par la figure 4.

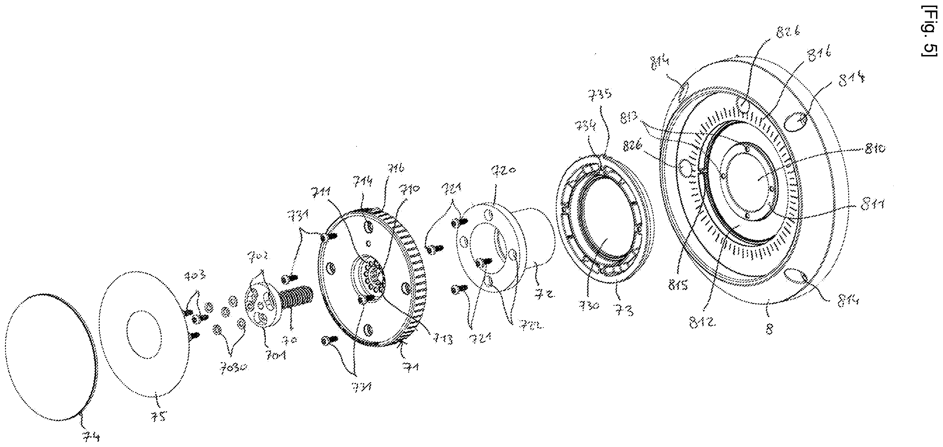

Le chariot 4 est entraîné en translation au moyen d'un mécanisme vis/écrou actionnable au moyen d'un bouton de réglage. L'écrou de ce mécanisme est l'écrou 42 décrit précédemment. La vis de réglage du mécanisme vis/écrou, le bouton de réglage et la pièce de carter à laquelle ils sont associés vont maintenant être décrits en références aux figures 5 à 7.

La vis de réglage 70 du mécanisme vis/écrou coopère avec l'écrou 42 monté dans le chariot 4. La vis 70 et l'écrou 42 sont dimensionnés pour que la course du chariot 4 soit limitée, par exemple inférieure ou égale à 5 cm. La tête de la vis 70 présente une bride 701 comportant des trous 702 pour le passage de vis.

Le bouton de réglage 71 se présente sous la forme d'une pièce circulaire sur la figure 5, mais une autre forme peut être envisagée (carrée, ovale, rectangulaire, ...). A titre d'exemple, son diamètre est compris entre 2 cm et 15 cm et son épaisseur comprise entre 0,5 cm et 2 cm. Il peut être réalisé en plastique injecté ou en métal, par exemple en aluminium.

Le bouton 71 présente une ouverture circulaire 710 traversant de part en part ledit bouton. Cette ouverture est coaxiale à l'axe du bouton 71. Elle est dimensionnée pour permettre le passage de la vis 70. Un aménagement 711 est réalisé sur la face avant du bouton 71, autour de l'ouverture 710. Cet aménagement 711 est conformé pour recevoir la bride 701 de la vis 70. La fixation de la bride 701 dans l'aménagement 711 (et donc de la vis 70 sur le bouton 71) est réalisée au moyen de vis 703, éventuellement associées à des rondelles de blocage 7030. Ces vis 703 passent au travers de trous traversant 702 et se vissent dans des trous taraudés 713 réalisés dans l'aménagement 711.

Pour améliorer l'esthétique et empêcher un accès intempestif aux vis 703, un cache 74 peut recouvrir la face avant du bouton 71. Ce cache 74 peut notamment être collée par une bande d'adhésif 75.

Un palier 72, avantageusement réalisé en acier pour limiter les frottements. Ce palier 72 se présente avantageusement sous la forme d'un tube cylindrique creux pourvu d'une bride 720 au niveau de son extrémité proximale. Les deux extrémités du palier 72 sont ouvertes pour laisser passer la vis de réglage 70. Le diamètre externe du palier 72 est inférieur au diamètre interne de l'espace annulaire 413 visible sur la figure 4. Le diamètre interne du palier 72 est ajusté au diamètre externe de l'axe 41. Lors de la translation du chariot 4, l'axe 41 coulisse dans le palier 70, celui-ci faisant office de guide.

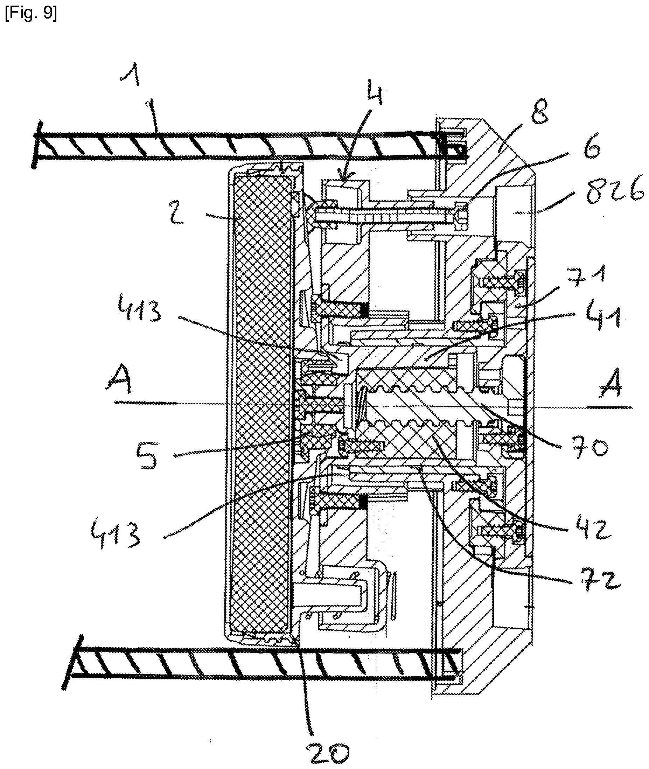

Le palier 72 est fixé sur une pièce de carter 8 du corps creux 1. En particulier, la pièce de carter 8 peut être fixée à une extrémité du tube formant le corps 1 (figure 9). Cette fixation peut être réalisée par exemple par collage, vissage, soudage, ou, préférentiellement au moyen de vis logées dans des perçages 814 réalisés sur ladite pièce. Cette solution présente l'avantage de pouvoir facilement démonter la pièce de carter 8 et de la désolidariser facilement du corps 1.

Sur la figure 5, la pièce de carter 8 se présente sous la forme d'une pièce circulaire, mais une autre forme peut être envisagée (carrée, ovale, rectangulaire, ...). A titre d'exemple, son diamètre est compris entre 5 cm et 50 cm et son épaisseur comprise entre 1 mm et 10 mm et son épaisseur comprise entre 0,5 cm et 5 cm. Elle peut être réalisée en plastique injecté ou en métal, par exemple en aluminium.

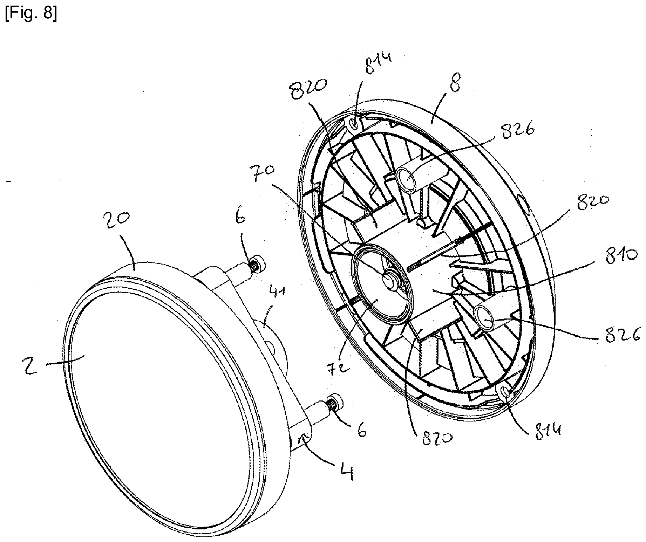

La pièce de carter 8 présente un logement tubulaire 810 traversant de part en part ladite pièce et qui fait saillie de la face arrière de ladite pièce (figure 8). Ce logement est coaxial à l'axe de la pièce de carter 8, c'est-à-dire centré sur le milieu de ladite pièce. Il est configuré pour loger le palier 72. Un aménagement 811 est réalisé sur la face avant de la pièce de carter 8, autour du logement 810. Cet aménagement 811 est conformé pour recevoir la bride 720 de du palier 72. La fixation de la bride 720 dans l'aménagement 811 (et donc du palier 72 sur la pièce de carter 8) est réalisée au moyen de vis 721. Ces vis 720 passent au travers de trous traversant 722 réalisés dans la bride 720 et se vissent dans des trous taraudés 813 réalisés dans l'aménagement 811.

Le bouton de réglage 71 est monté mobile en rotation dans la pièce de carter 8, autour d'un axe qui est coaxial à l'axe optique A-A du télescope. Sur la figure 5, le bouton 71, pourvu de la vis 70, est adapté pour se loger dans un logement 812 aménagé sur la face avant de la pièce de carter 8. Ce logement 812 est coaxial à l'axe de la pièce de carter 8, c'est-à-dire centrée sur le milieu de ladite pièce. Ce logement 812 est circulaire, sa profondeur et son diamètre correspondant sensiblement à ceux du bouton 71 de sorte que ledit bouton peut tourner librement autour de son axe lorsqu'il est installé dans ledit logement. Le bouton 71 étant installé sur la face avant de la pièce de carter 8, il est librement préhensible depuis l'extérieur du corps creux 1.

Selon un mode de réalisation, le bouton 71 est maintenu en position sur la pièce de carter 8, et plus particulièrement dans le logement 812, tout en conservant sa liberté de rotation. Ce maintien en position est réalisé au moyen d'une pièce de blocage 73. Sur la figure 5, la pièce de blocage 73 se présente sous la forme d'une pièce circulaire, mais une autre forme peut être envisagée (carrée, ovale, rectangulaire, ...). Son diamètre correspond sensiblement à celui du bouton 71. Elle peut être réalisée en plastique injecté ou en métal, par exemple en aluminium.

La pièce de blocage 73 présente une ouverture circulaire 730 traversant de part en part ladite pièce. Cette ouverture est coaxiale à l'axe de la pièce 73. Elle est dimensionnée pour permettre le passage du palier 72. Le diamètre de l'ouverture 730 est toutefois inférieur au diamètre de la bride 720 de sorte que cette dernière fasse office de butée.

Le montage du bouton 71 sur le palier 72 est préférentiellement réalisé de la manière suivante :
- On insère la pièce de blocage 73 sur le palier 72, depuis l'extrémité distale dudit palier. L'insertion est réalisée jusqu'à ce que la bordure de l'ouverture 730 vienne en butée contre la face arrière de la bride 720.
- On positionne ensuite le bouton 71 en face de la bride 720.
- On solidarise enfin le bouton 71 à la pièce de blocage 73 au moyen de vis 731. Ces vis 731 passent au travers de trous traversant 714 réalisés dans le bouton 71 et se vissent dans des trous taraudés 734 réalisés sur la pièce de blocage 73.

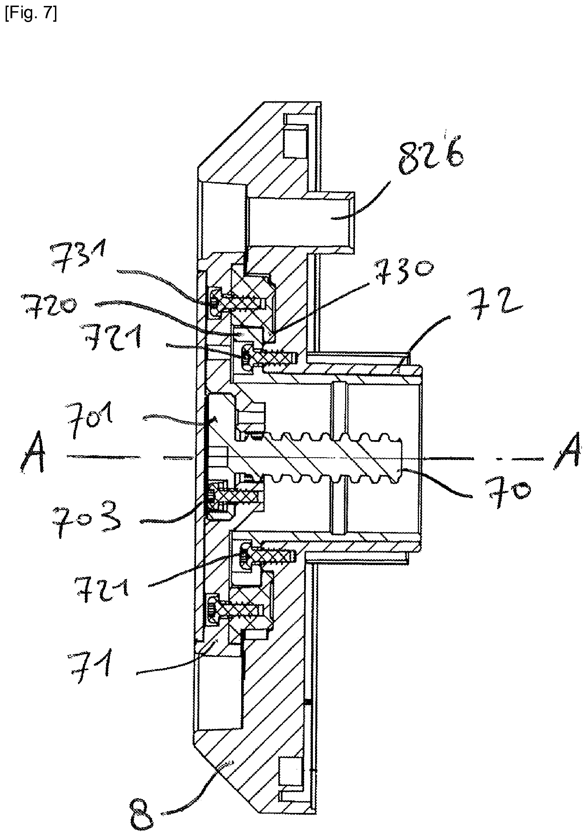

Dans cette configuration, et comme illustrée sur la figure 7, la bride 720 est prise en sandwich entre le bouton 71 et la pièce de blocage 73. L'ensemble formé par le bouton 71 et la pièce de blocage 73 est libre de pivoter autour de l'axe X-X dudit bouton - ou du palier 72 - mais est bloqué en translation sur ledit palier par la coopération de l'ouverture 730 avec la bride 720. Quand le palier 72 est fixé sur la pièce de carter 8, le bouton 71 peut tourner autour de son axe X-X mais ne peut pas sortir du logement 812 de ladite pièce.

Lorsque le bouton 71 et le palier 72 sont installés sur la pièce de carter 8, on assemble cet ensemble à l'ensemble formé par le miroir 2, le plateau 20 et le chariot 40. En se rapportant aux figures 8 et 9, cet assemblage est réalisé en visant la vis de réglage 72 dans l'écrou 42. La vis 72 est engagée dans l'écrou 42 sur une distance suffisamment longue pour permettre une translation du chariot 4 le long de l'axe optique A-A sur une distance d'environ 2 cm vers l'avant et 2 cm vers l'arrière. Il peut être avantageux de ne pas avoir à manipuler le bouton 71 pour engager la vis 72 dans l'écrou 42. Aussi, la solidarisation du bouton 71 sur la bride 701 de la vis 70 peut être opérée seulement après avoir installé la vis 72 dans l'écrou 42.

Lors de l'assemblage, le palier 72 vient recouvrir l'axe 41 et vient se loger dans l'espace annulaire 413. En se rapportant à la figure 8, la pièce de carter 8 présente sur sa face arrière des nervures ou ailettes longitudinales 820. Ces nervures ou ailettes 820 sont réalisées sur la paroi externe du logement 810 faisant saillie de la face arrière de la pièce de carter 8. Ces nervures ou ailettes 820 sont adaptées pour s'engager dans les rainures de guidage 402 aménagées sur la paroi interne du logement 400 de la platine 40. La coopération des rainures 402 et des nervures ou ailettes 820 permet essentiellement un blocage en rotation du chariot 4 par rapport à la pièce de carter 8, et subsidiairement un guidage en translation supplémentaire dudit chariot.

Dans cette configuration d'assemblage, lorsqu'un utilisateur tourne le bouton 71, la vis de réglage 70 est entrainée en rotation. Le mouvement de rotation de la vis 70 entraîne un mouvement de translation de l'écrou 42 et de fait une translation du chariot 4 le long de l'axe optique. Sur les figures annexées, la vis 70 et l'écrou 42 sont coaxiaux à l'axe optique A-A. Ce mode de réalisation avantageux permet d'avoir un bouton 71 qui centré sur la pièce de carter 8 et sur l'axe optique A-A. On peut ainsi optimiser la compacité du dispositif de réglage. Cette disposition de la vis 70 et de l'écrou 42 permet en outre de limiter les efforts pour déplacer le chariot 4, le plateau 20 et le miroir 4. L'utilisateur n'a pas besoin de forcer pour faire tourner le bouton 71.

Sur les figures 8 et 9, la pièce de carter 8 présente des perçages 826 traversant de part en part ladite pièce. Lorsque le chariot 40 est assemblé sur la pièce de carter 8 (c'est-à-dire lorsque la vis de réglage 72 est engagée dans l'écrou 42), les vis 6 permettant de réglage de l'inclinaison du plateau 20 se logent dans ces perçages 826. L'utilisateur a ainsi accès aux têtes des vis 6, depuis l'extérieur du corps 1, et plus précisément depuis la face avant de la pièce de carter 8. Il lui suffit d'introduire un outil adapté dans les perçages 826 pour actionner les vis 6.

Lorsque l'utilisateur effectue la mise au point, il tourne le bouton 71 pour déplacer le chariot 4 le long de l'axe optique, jusqu'à ce que le miroir 2 atteigne la position voulue. Il n'est toutefois pas souhaitable que l'utilisateur puisse dérégler de manière déraisonnable la position du miroir 2 sur l'axe optique. En effet, si l'utilisateur fait faire dix tours au bouton 71, la longueur focale du système optique va être fortement déréglée. Et un utilisateur amateur aura le plus grand mal à retrouver une position cohérente du miroir 2 pour obtenir une image de qualité. Il apparaît donc souhaitable de limiter la rotation du bouton 71 et le déplacement du chariot 4.

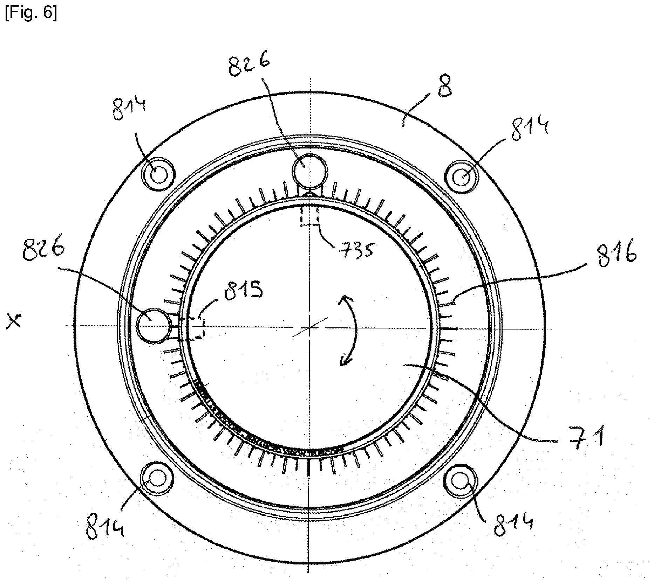

Pour ce faire, et comme illustré sur les figures 5 et 6, un organe de butée 815 est aménagé dans la pièce de carter 8. Sur les figures 5 et 6, cet organe de butée 815 est ménagé dans le logement 812 de la pièce de carter 8, sur la paroi latérale dudit logement. L'organe de butée 815 est en saillie radiale depuis cette la paroi latérale. Un organe de butée complémentaire 735 est aménagé sur la bordure extérieure de la pièce de blocage 73. L'organe de butée 815 est en saillie radiale depuis cette bordure extérieure. Lorsque le bouton 71 (solidaire de la pièce de blocage 73) est monté sur la pièce de carter 8, et que les deux organes de butée 735 et 815 rentrent en contact l'un de l'autre, la rotation dudit bouton est bloquée. Dans l'exemple de la figure 9, le bouton 71 est initialement positionné de sorte que l'organe de butée 735 soit à la verticale. L'organe de butée complémentaire 815 de la pièce de carter 8 est positionné à l'horizontale. Dans cette configuration, le bouton 71 peut être tourné de 90° dans le sens antihoraire jusqu'à ce que les deux organes de butée 735 et 815 rentrent en contact et bloque la rotation. Le bouton 71 peut également être tourné de 270° dans le sens horaire jusqu'à ce que les deux organes de butée 735 et 815 rentrent en contact et bloque la rotation. Finalement, les organes de butée 735, 815 sont agencés pour limiter la rotation du bouton 71 à un seul tour (360°, abstraction faite des épaisseurs desdits organes).

En limitant la rotation du bouton 71, on limite le débattement du chariot 4. Il apparait avantageux en termes d'utilisation et de manipulation par un amateur, de limiter la translation du chariot 4 sur une distance comprise entre 1 mm et 2 cm (0,5 mm à 1 cm vers l'avant et 0,5 cm à 1 cm vers l'arrière). En pratique, le débattement autorisé correspond au pas de la vis de réglage 70 (par exemple, si son pas est de 4 mm, le débattement du chariot 4 est de 4 mm) L'utilisateur peut ainsi très rapidement effectuer la mise au point, sans risque de dérégler trop fortement la longueur focale du système optique. Le débattement limité du chariot 4 permet toutefois à l'utilisateur de faire une mise au point sur des objets plus proches qu'un objet céleste, par exemple un paysage, un monument, etc.

En tout état de cause, pour permettre un réglage fin de la position du miroir 2, le bouton 71 et/ou la pièce de carter 8 sont préférentiellement munis de graduations 716, 816. Ces graduations sont visibles par l'utilisateur.

Un réglage de l'inclinaison et de la position du miroir 2 est avantageusement réalisé en usine pour obtenir la meilleure qualité d'image possible. Un tel réglage peut être réalisé au moyen d'un masque de Bahtinov et/ou à partir d'une source Laser. Pour un utilisateur amateur, le réglage peut être effectué de différentes façons connues. Par exemple, la mise au point est réalisée en fonction de la netteté de l'image. Et réglage de l'inclinaison du miroir peut être effectué en visant une étoile et en minimisant la taille de son image : si le réglage est correct, l'image de l'étoile est un point ; si le réglage est mauvais, l'image de l'étoile est plus grosse.

Le réglage usine peut consister à prérégler la position du chariot 4 à l'aide de la vis de réglage 70. L'opérateur a accès à toute la course du mécanisme vis-écrou de sorte qu'il peut facilement s'affranchir des variations de côtes des différentes pièces, et faire un réglage optimal où la distance séparant le miroir 2 du capteur 3 est égale à la longueur focale du système optique. Une fois ce réglage fait, l'opérateur solidarise le bouton 71 à la vis de réglage 70. Le bouton 71 est positionné sur une graduation « zéro » (matérialisée par un ergot 717 du bouton 71 positionné à la verticale). L'opérateur peut ensuite empêcher l'accès au réglage usine en mettant en place le cache 74. Il est à noté que l'utilisateur fibnal peut retrouver très facilement cette position de réglage usine en repositionnant le bouton 71 sur la graduation « zéro ».

Comme illustré sur la figure 9, lorsque touts les éléments sont assemblés, on obtient un dispositif de réglage très compact et facilement manipulable. Il peut être inséré d'un bloc dans le corps creux 11, de manière très rapide et très simple. De même, en cas d'avarie sur un des éléments, il peut être retiré très facilement du corps 1 et remplacer par un autre dispositif de réglage directement opérationnel.

L'agencement des différents éléments et/ou moyens et/ou étapes de l'invention, dans les modes de réalisation décrits ci-dessus, ne doit pas être compris comme exigeant un tel agencement dans toutes les implémentations. D'autres variantes peuvent être prévues et notamment :
- L'articulation assurant la liaison du plateau 20 sur le chariot 4 peut consister en une simple liaison pivot, bien que cette solution offre moins de possibilité de réglage de l'inclinaison dudit plateau.
- Les actionneurs peuvent se présenter sous la forme de piston. Ils peuvent éventuellement être motorisés bien que cela complexifie la conception et augmente les coûts de fabrication.
- Un seul actionneur (notamment une seule vis de réglage 6) peut être employé pour modifier l'inclinaison du plateau 20, notamment dans le cas où les possibilités de réglage de l'inclinaison du miroir 2 peuvent être réduites.
- La section des différentes pièces (notamment plateau support, pièce de carter, bouton, palier, ...) est généralement circulaire, mais d'autres formes peuvent être prévues, en particulier pour s'adapter à la section du corps 1.
- La position des zones de contact 204a, 204b et/ou 261a, 261b n'est pas nécessairement de 90°. Elles peuvent par exemple former avec le centre de la rotule 5 un angle α compris entre 10° et 170°. De même, les zones de contact 204a, 204b et/ou 261a, 261b ne sont pas nécessairement positionnée à la verticale et à l'horizontale du centre de la rotule 5.
- Les organes élastiques 61 peuvent se présenter sous la forme de tampon en élastomère, de lames ressort, etc.
- Un seul ou plus de deux organes élastique 61 peuvent être prévus.
- Dans le mécanisme vis/écrou, on peut envisager d'inverser la conception, à savoir un écrou en prise avec le bouton de réglage 71 et une vis solidaire du chariot 4, l'écrou jouant alors le rôle d'organe moteur.
- La position et le nombre d'organes de butée 735, 815 peut varier. En outre, ces organes peuvent être agencés et/ou configurés pour limiter la rotation du bouton 71 à moins d'un tour (moins de 360°, par exemple 180°) où à plus de un tour (plus de 360°).
- La vis 70 et l'écrou 42 du mécanisme vis/écrou ne sont pas nécessairement coaxiaux à l'axe optique A-A.
- L'organe de butée 735 associé au bouton de réglage 71 peut être directement aménagé sur une paroi dudit bouton.
- Le bouton 71 est avantageusement en prise directe avec la vis de réglage 70 comme illustré sur les figures annexées. On peut toutefois envisager une prise indirecte, par exemple en interposant un réducteur entre le bouton 71 et la vis indirecte vis de réglage 70
- Le dispositif de réglage convient à des systèmes optiques d'autres appareils de capture d'images d'objets observés, tels que des appareils photos, des appareils de laboratoires, etc.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques.

## Revendications

1. Télescope comportant :
- un corps creux (1) à l'intérieur duquel pénètrent, en usage, des rayons lumineux (R) provenant d'un objet observé (O), lequel corps creux (1) comprend une pièce de carter (8),
- un système optique positionné dans le corps creux (1) pour former, dans un plan focal (F), une image de l'objet observé (O), lequel système optique comprend au moins un miroir (2) adapté pour réfléchir les rayons lumineux (R) pénétrant dans ledit corps,
- un dispositif de réglage de l'inclinaison et de la position du miroir (2),
**caractérisé en ce que** le dispositif de réglage comporte:
- un chariot (4) monté mobile en translation dans le corps creux (1), selon l'axe optique (A-A),
- un plateau support (20) dans lequel est fixé le miroir (2), lequel plateau est solidarisé au chariot (4) au moyen d'une articulation (5) permettant une modification de l'inclinaison dudit plateau,
- le chariot (4) est entraîné en translation au moyen d'un mécanisme vis/écrou,
o le mécanisme vis/écrou est actionnable au moyen d'un bouton de réglage (71) préhensible depuis l'extérieur du corps creux (1), lequel bouton est en prise avec la vis (70) ou l'écrou dudit mécanisme,
o le bouton de réglage (71) est monté mobile en rotation dans la pièce de carter (8) du corps creux (1),
o le bouton de réglage (71) est agencé avec le mécanisme vis/écrou de sorte qu'une rotation dudit bouton entraîne le déplacement en translation du chariot (4),
o le bouton de réglage (71) est associé à un organe de butée (735) adapté pour coopérer avec un organe de butée complémentaire (815) aménagé dans la pièce de carter (8), de manière à limiter la rotation dudit bouton et le déplacement du chariot (4),
- au moins un actionneur (6) est monté mobile dans le chariot (4) et qui agit sur le plateau support (20), de sorte qu'un déplacement dudit actionneur entraîne une modification de l'inclinaison ledit plateau, lequel actionneur est actionnable depuis l'extérieur du corps creux (1), depuis la pièce de carter (8).

2. Télescope selon la revendication 1, dans lequel les organes de butée (735, 815) sont agencés pour limiter la rotation du bouton de réglage (71) à un seul tour.

3. Télescope selon l'une des revendications précédentes, dans lequel :
- la vis (70) et l'écrou (42) du mécanisme vis/écrou sont coaxiaux à l'axe optique (A-A) du télescope,
- le bouton de réglage (71) est monté mobile en rotation autour d'un axe qui est coaxial à l'axe optique (A-A) du télescope.

4. Télescope selon l'une des revendications précédentes, dans lequel l'articulation du plateau support (20) sur le chariot (4) est une rotule (5) centrée sur l'axe du miroir (2).

5. Télescope selon la revendication 3, dans lequel le centre du miroir (2) est positionné sur l'axe optique (A-A).

6. Télescope selon l'une des revendications précédentes, dans lequel :
- deux actionneurs sont montés mobiles dans le chariot (4),
- chaque actionneur se présente sous la forme d'une vis de réglage (6) dont l'extrémité distale (60) agit contre le plateau support (20) pour modifier l'inclinaison dudit plateau.

7. Télescope selon la revendication 6, dans lequel l'extrémité distale (60) de la vis de réglage (6) est de forme sphérique et se loge dans un siège solidaire du plateau support (20), ledit siège et ladite extrémité distale étant configurés de manière à former une liaison linéaire/annulaire.

8. Télescope selon la revendication 4 prise en combinaison avec la revendication 6 ou avec la revendication 7, dans lequel chaque vis de réglage (6) agit dans une zone de contact (204a, 204b) distincte, lesquelles zones forment avec le centre de la rotule (5) un angle (α) de 90°.

9. Télescope selon la revendication 8, dans lequel :
- un ou plusieurs organes élastiques (61) agissent sur le plateau support (20),
- chaque organe élastique agit dans une zone de contact (261a, 261b), qui est distincte des zones de contact (204a, 204b) des vis de réglage (6).

10. Télescope selon l'une des revendications précédentes, dans lequel le bouton de réglage (71) et/ou la pièce de carter (8) sont munis de graduations (716, 816).

## Patentansprüche

1. Teleskop, umfassend:
- einen hohlen Körper (1), in dessen Inneres im Gebrauch Lichtstrahlen (R) eintreten, die von einem beobachteten Objekt (O) stammen, wobei der hohle Körper (1) ein Gehäuseteil (8) umfasst,
- ein optisches System, das im hohlen Körper (1) positioniert ist, um in einer Brennebene (F) ein Bild des beobachteten Objekts (O) zu erzeugen, wobei das optische System mindestens einen Spiegel (2) umfasst, der dazu ausgelegt ist, die in den Körper eintretenden Lichtstrahlen (R) zu reflektieren,
- eine Vorrichtung zum Einstellen der Neigung und der Position des Spiegels (2),
**dadurch gekennzeichnet, dass** die Einstellvorrichtung Folgendes aufweist:
- einen Schlitten (4), der entlang der optischen Achse (A-A) translatorisch bewegbar im hohlen Körper (1) montiert ist,
- eine Trägerplatte (20), in der der Spiegel (2) befestigt ist, wobei die Platte mit Hilfe eines Gelenks (5), das eine Änderung der Neigung der Platte ermöglicht, fest mit dem Schlitten (4) verbunden ist,
- wobei der Schlitten (4) mit Hilfe eines Schraube-Mutter-Mechanismus translatorisch angetrieben wird,
o wobei der Schraube-Mutter-Mechanismus mit Hilfe eines Einstellknopfs (71) betätigbar ist, der von außerhalb des hohlen Körpers (1) greifbar ist, wobei der Knopf mit der Schraube (70) oder der Mutter des Mechanismus in Eingriff steht,
o wobei der Einstellknopf (71) drehbeweglich im Gehäuseteil (8) des hohlen Körpers (1) gelagert ist,
o wobei der Einstellknopf (71) mit dem Schraube-Mutter-Mechanismus so angeordnet ist, dass eine Drehung des Knopfs die translatorische Bewegung des Schlittens (4) bewirkt,
o wobei der Einstellknopf (71) mit einem Anschlagelement (735) verbunden ist, das dazu geeignet ist, mit einem im Gehäuseteil (8) angeordneten komplementären Anschlagelement (815) zusammenzuwirken, um die Drehung des Knopfs und die Bewegung des Schlittens (4) zu begrenzen,
- mindestens einen Aktor (6), der beweglich im Schlitten (4) montiert ist und so auf die Trägerplatte (20) wirkt, dass eine Bewegung des Aktors eine Änderung der Neigung der Platte bewirkt, wobei der Aktor von außerhalb des hohlen Körpers (1) vom Gehäuseteil (8) aus betätigbar ist.

2. Teleskop nach Anspruch 1, wobei die Anschlagelemente (735, 815) so angeordnet sind, dass sie die Drehung des Einstellknopfs (71) auf eine einzige Umdrehung begrenzen.

3. Teleskop nach einem der vorangehenden Ansprüche, wobei:
- die Schraube (70) und die Mutter (42) des Schraube-Mutter-Mechanismus koaxial zur optischen Achse (A-A) des Teleskops sind,
- der Einstellknopf (71) um eine zur optischen Achse (A-A) des Teleskops koaxiale Achse drehbar montiert ist.

4. Teleskop nach einem der vorangehenden Ansprüche, wobei das Gelenk der Trägerplatte (20) am Schlitten (4) ein Kugelgelenk (5) ist, das auf der Achse des Spiegels (2) zentriert ist.

5. Teleskop nach Anspruch 3, wobei die Mitte des Spiegels (2) auf der optischen Achse (A-A) positioniert ist.

6. Teleskop nach einem der vorangehenden Ansprüche, wobei:
- zwei Aktoren beweglich im Schlitten (4) montiert sind,
- jeder Aktor die Form einer Stellschraube (6) aufweist, deren distales Ende (60) gegen die Trägerplatte (20) wirkt, um die Neigung der Platte zu verändern.

7. Teleskop nach Anspruch 6, wobei das distale Ende (60) der Stellschraube (6) kugelförmig ist und in einen Sitz passt, der fest mit der Trägerplatte (20) verbunden ist, wobei der Sitz und das distale Ende so konfiguriert sind, dass sie eine lineare/ringförmige Verbindung bilden.

8. Teleskop nach Anspruch 4 in Kombination mit Anspruch 6 oder mit Anspruch 7, wobei jede Stellschraube (6) in einem separaten Kontaktbereich (204a, 204b) wirkt, wobei die Bereiche mit der Mitte des Kugelgelenks (5) einen Winkel (α) von 90° bilden.

9. Teleskop nach Anspruch 8, wobei:
- ein oder mehrere elastische Elemente (61) auf die Trägerplatte (20) wirken,
- jedes elastische Element in einem Kontaktbereich (261a, 261b) wirkt, der von den Kontaktbereichen (204a, 204b) der Stellschrauben (6) verschieden ist.

10. Teleskop nach einem der vorangehenden Ansprüche, wobei der Einstellknopf (71) und/oder das Gehäuseteil (8) mit Skalen (716, 816) versehen sind.

## Claims

1. Telescope comprising:
- a hollow body (1) which, during use, is entered by light rays (R) originating from an observed object (0), which hollow body (1) comprises a casing component (8),
- an optical system positioned in the hollow body (1) to form, in a focal plane (F), an image of the observed object (0), which optical system comprises at least one mirror (2) suitable for reflecting the light rays (R) entering said body,
- an adjusting device for adjusting the inclination and position of the mirror (2),
**characterized in that** the adjusting device comprises:
- a carriage (4) mounted translationally mobile in the hollow body (1) along the optical axis (A-A),
- a support plate (20) in which the mirror (2) is fixed, which plate is secured to the carriage (4) by means of an articulation (5) that allows the inclination of said plate to be modified,
- the carriage (4) is translationally driven by means of a screw/nut mechanism,
o the screw/nut mechanism can be actuated by means of an adjusting knob (71) that can be grasped from outside the hollow body (1), which knob is engaged with the screw (70) or the nut of said mechanism,
o the adjusting knob (71) is mounted rotationally mobile in the casing component (8) of the hollow body (1),
o the adjusting knob (71) is arranged in relation to the screw/nut mechanism in such a way that turning said knob causes translational movement of the carriage (4),
o the adjusting knob (71) is associated with an end-stop member (735) suitable for collaborating with a complementary end-stop member (815) formed in the casing component (8) so as to limit the turning of said knob and the movement of the carriage (4),
- at least one actuator (6) is mounted mobile in the carriage (4) and that acts on the support plate (20) so that movement of said actuator causes the inclination of said plate to be modified, which actuator can be actuated from outside the hollow body (8) from the casing component (8).

2. Telescope according to Claim 1, wherein the end-stop members (735, 815) are designed to limit the turning of the adjusting knob (71) to one single turn.

3. Telescope according to one of the preceding claims, wherein:
- the screw (70) and the nut (42) of the screw/nut mechanism are coaxial with the optical axis (A-A) of the telescope,
- the adjusting knob (71) is mounted rotationally mobile about an axis which is coaxial with the optical axis (A-A) of the telescope.

4. Telescope according to one of the preceding claims, wherein the articulation of the support plate (20) on the carriage (4) is a ball joint (5) centred on the axis of the mirror (2).

5. Telescope according to Claim 3, wherein the centre of the mirror (2) is positioned on the optical axis (A-A) .

6. Telescope according to one of the preceding claims, wherein:
- two actuators are mounted mobile in the carriage (4),
- each actuator takes the form of an adjusting screw (6) of which the distal end (60) acts against the support plate (20) to modify the inclination of said plate.

7. Telescope according to Claim 6, wherein the distal end (60) of the adjusting screw (6) is spherical in shape and is housed in a seat secured to the support plate (20), said seat and said distal end being configured in such a way as to form a linear/annular connection.

8. Telescope according to Claim 4 considered in combination with Claim 6 or with Claim 7, wherein each adjusting screw (6) acts in a distinct contact zone (204a, 204b) which zones make, with the centre of the ball joint (5), an angle (α) of 90°.

9. Telescope according to Claim 8, wherein:
- one or more elastic members (61) act on the support plate (20),
- each elastic member acts in a contact zone (261a, 261b) which is distinct from the contact zones (204a, 24b) of the adjusting screws (6).

10. Telescope according to one of the preceding claims, wherein the adjusting knob (71) and/or the casing component (8) are equipped with graduations (716, 816).
